# EUROPÄISCHE PATENTANMELDUNG

(11) **EP 0 923 019 A2**
(43) Veröffentlichungstag der Anmeldung: **16.06.1999**
(21) Anmeldenummer: 98100186.0
(22) Anmeldetag: 08.01.1998
(51) Int. Cl.: G06F 1/18

(54) **Computergehäuse**

(30) Priorität: 03.12.1997 DE 29721347 U
(71) Anmelder: Kengtech Electronics GmbH, 41515 Grevenbroich (DE)
(72) Erfinder: Chi Keng, 41812 Erkelenz (DE); Chih-Huang Cheng, 41515 Grevenbroich (DE)
(74) Vertreter: Sparing - Röhl - Henseler Patentanwälte

(57) **Zusammenfassung**

Die Erfindung betrifft ein Computergehäuse mit einem quaderförmigen Gehäuseteil (2), einem Frontpaneel (1) umfassend einen Hauptrahmen (10), ein oberes Paneel (18), ein unteres Paneel (17) und ein Seitenpaneel (19), wobei der Hauptrahmen (10) mit der Vorderseite des Gehäuseteils (2) lösbar in Eingriff steht, einen unteren Mittelabschnitt mit einer sich schräg aufwärts erstreckenden Öffnung (14) zur Aufnahme einer Schraube (173) in Eingriff mit einer Gewindebohrung (20) des Gehäuseteils (2) sowie seitlich eine vertikale Nut (11) und frontseitig eine weitere vertikale Nut (12) aufweist, wobei das obere Paneel (18) mit einem oberen Abschnitt des Hauptrahmens (10), das untere Paneel (17) mit einem unteren Abschnitt des Hauptrahmens (10) und das Seitenpaneel (19) mit der weiteren vertikalen Nut (12) des Hauptrahmens (10) lösbar in Eingriff ist, einem Dämpfungsglied (121) an der Rückseite des Hauptrahmens (10) in Eingriff mit dem oberen Paneel (18), zwei Seitenwandplatten (26), die auf gegenüberliegenden Seiten des Gehäuseteils (2) angeordnet sind, einem aus wenigstens einem Plattenlaufwerkrahmen (3) bestehenden Stapel aus Plattenlaufwerkrahmen (3), der mit den Oberkanten der Seitenwandplatten (26) und der Oberseite des Gehäuseteils (2) lösbar in Eingriff ist, wobei die Oberseite jedes Plattenlaufwerkrahmens (3) mit einer Vielzahl von Klammern (364) versehen ist, und einem Deckel (44), der mit der Oberseite des obersten Plattenlaufwerkrahmens (3) lösbar in Eingriff ist.

## Beschreibung

Die Erfindung betrifft ein Computergehäuse.

Bekannte Computergehäuse sind bezüglich Form und Größe nicht veränderbar, so daß es gegebenenfalls notwendig ist, verschiedene Gehäuse für verschiedene Ausführungen von Computern vorzusehen. Dies bereitet insbesondere dann noch zusätzliche Probleme, wenn der Computer aufgerüstet werden soll.

Aufgabe der Erfindung ist es, ein Computergehäuse zu schaffen, das es ermöglicht, für verschiedene Ausführungsformen von Computern verwendet zu werden.

Diese Aufgabe wird entsprechend Anspruch 1 gelöst.

Hierdurch kann ein Stapel von einem oder mehreren Plattenlaufwerkrahmen vorgesehen werden, so daß sich das Gehäuse für verschiedene Typen von Computern sowie zur Nachrüstung hiervon eignet. Dabei beseitzt das Gehäuse eine einfache, stabile Konstruktion.

Weitere Ausgestaltungen der Erfindung sind der nachfolgenden Beschreibung und den Unteransprüchen zu entnehmen.

Die Erfindung wird nachstehend anhand eines in den beigefügten Abbildungen dargestellten Ausführungsbeispiels näher erläutert.
Fig. 1 zeigt auseinandergezogen ein Frontpaneel.
Fig. 2 zeigt perspektivisch das Frontpaneel von Fig. 1.
Fig. 3 zeigt einen Schnitt des Frontpaneels von Fig. 1.
Fig. 4 zeigt auseinandergezogen ein Computergehäuse.
Fig. 5 zeigt perspektivisch das Computergehäuse von Fig. 4 mit entferntem Frontpaneel.

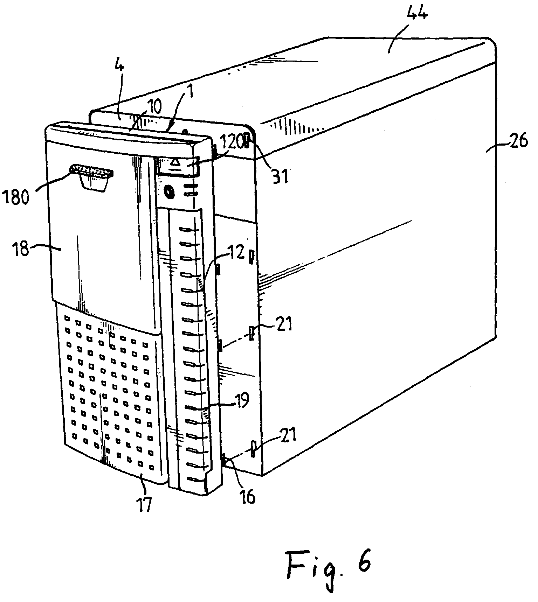

Fig. 6 zeigt den Eingriff zwischen Frontpaneel und dem restlichen Teil des Computergehäuses von Fig. 4.

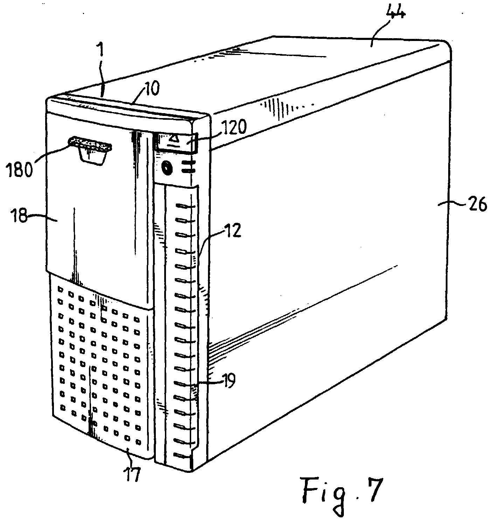

Fig. 7 zeigt perspektivisch das Computergehäuse von Fig. 4.

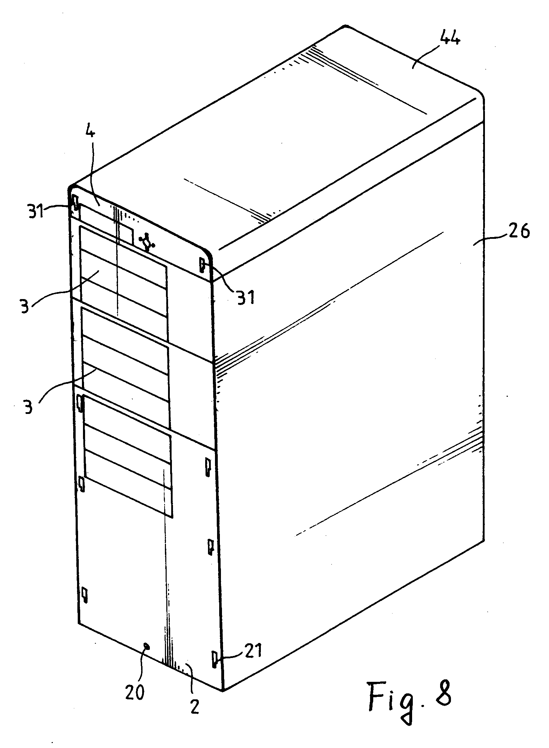

Fig. 8 zeigt das Computergehäuse von Fig. 4 mit einem weiteren Plattenlaufwerkrahmen.
Fig. 9 zeigt einen Ausschnitt von Fig. 4 mit einem zusätzlichen Griff.
Fig. 10 zeigt eine Ausführungsform einer Lasche von Fig. 4.

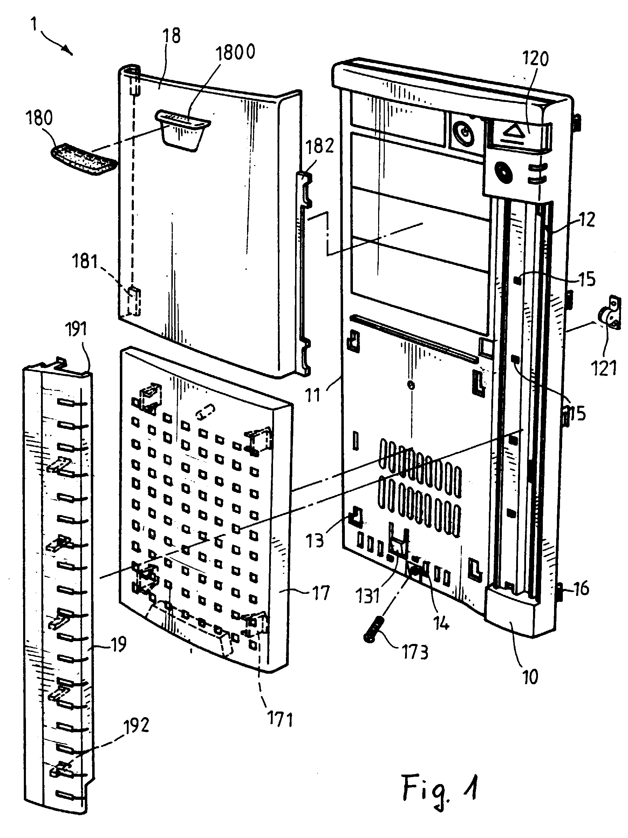

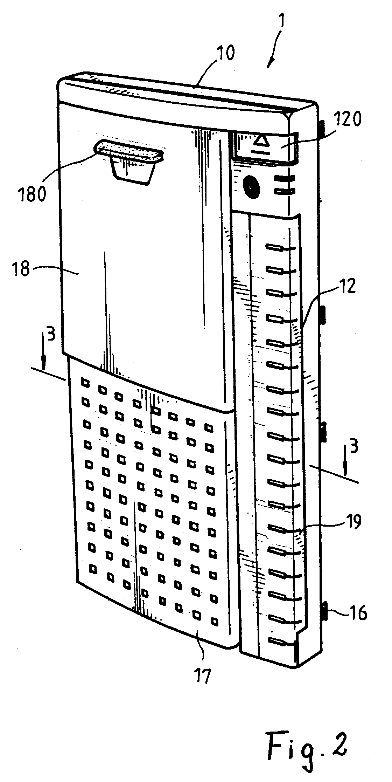

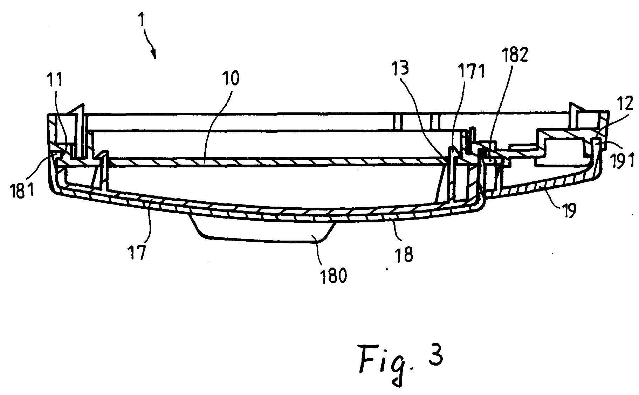

In den Fig. 1 bis 4 ist ein quaderförmiges Gehäuseteil 2 dargestellt, das ein Frontpaneel 1, zwei Seitenwandplatten 26, einen Plattenlaufwerkrahmen 3 und einen Deckel 44 umfaßt. Das Frontpaneel 1 umfaßt einen Hauptrahmen 10, ein unteres Paneel 17, ein oberes Paneel 18 und ein Seitenpaneel 19. Die Rückseite des Hauptrahmens 10 ist mit einer Vielzahl von Haken 16 benachbart zu den beiden vertikalen Kanten hiervon versehen, um den Hauptrahmen 10 mit dem Gehäuseteil 2 in Eingriff zu bringen. Der untere Abschnitt des Hauptrahmens 10 besitzt eine aufwärts geneigt angeordnete Öffnung 14 zur Aufnahme einer Schraube 173 zum Eingriff mit einer in einem Winkel von 45° angeordneten Gewindebohrung 20 des Gehäuseteils 2. Die Vorderseite des Hauptrahmens 10 besitzt eine Vielzahl von im wesentlichen rechteckigen Öffnungen 13 an beiden Seiten hiervon zum Eingriff mit Haken 171 an der Rückseite des unteren Paneels 17. Die linke Seite des Hauptrahmens 10 (gemäß Fig. 3) besitzt eine vertikal verlaufende Nut 11 zum Eingriff mit einem Vorsprung 181 an der linken Kante des oberen Paneels 18. Die rechte Seite des Hauptrahmens 10 besitzt eine vertikal verlaufende Nut 12 zum Eingriff mit einer rechten Kante 191 des Seitenpaneels 19. Die linke Kante des Seitenpaneels 19 ist auf Vorsprüngen 182 an der rechten Seite des oberen Paneels 18 angeordnet, so daß das obere Paneel 18 längs der linken Kante des Seitenpaneels 19 entlang gleiten kann. Der Hauptrahmen 10 ist auf der linken Seite der vertikalen Nut 12 mit einer Vielzahl von ausgerichteten Löchern 15 zum Eingriff mit Haken 192 an der Rückseite des Seitenpaneels 19 versehen. Die Frontseite des oberen Paneels 18 weist einen Griff 1800 mit einer Bekleidung 180 hierfür auf. Der obere Abschnitt des Hauptrahmens 10 besitzt eine Öffnung zur Aufnahme eines Druckknopfes 120, der operativ mit dem oberen Paneel 18 verbunden ist, so daß dann, wenn der Druckknopf 120 betätigt wird, das obere Paneel 18 geöffnet wird.

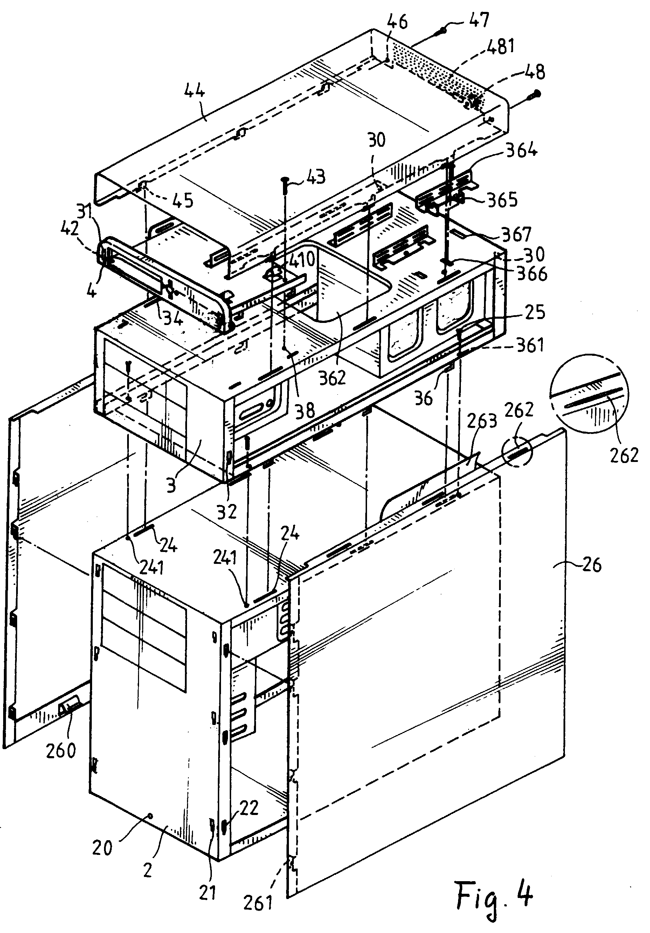

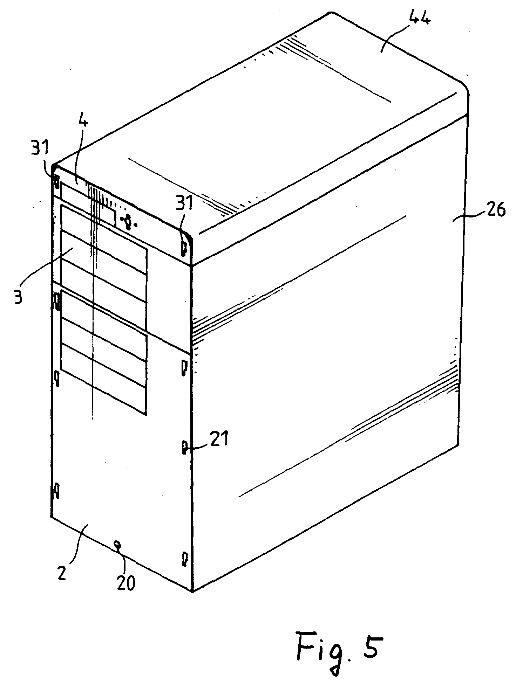

Gemäß Fig. 4, 5 ist das quaderförmige Gehäuseteil 2 mit einer Vielzahl von Öffnungen 21 benachbart zu den vertikalen Kanten der Frontseite zum Eingriff mit den Haken 16 des Hauptrahmens 10 und einer Vielzahl von Öffnungen 22 an den beiden gegenüberliegenden Seitenflächen des Gehäuseteils 2 zum Eingriff mit Haken 261 an den Innenseiten von zwei Seitenplatten 26 versehen. Die Öffnung 22 ist etwa in Form eines umgekehrten Dreiecks ausgebildet, um einen festen Eingriff mit dem Haken 261 zu bewirken. Die Seitenplatte 26 ist mit einer Vielzahl von Haken 240 an der unteren Innenkante zum Eingriff mit dem unteren Ende des Gehäuseteils 2 und einer Vielzahl von dreieckigen Öffnungen 262 an der Oberkante zum Eingriff mit Zungen 45 an der Oberkante des Deckels 44 versehen. Die Seitenplatte 26 besitzt eine gekrümmte Lasche 263 an der Oberkante, die als Griff verwendet wird, um die Handhabung und das Hochziehen zu erleichtern. Die Oberseite des Gehäuseteils 2 besitzt eine Vielzahl von Öffnungen 23 an der Vorderkante, eine Vielzahl von etwa dreieckigen Öffnungen 24 an beiden Seiten und eine Vielzahl von Gewindebohrungen 241 an beiden Seiten und nahe zur Vorderkante zur Aufnahme von Schrauben 25 zum Befestigen des Plattenlaufwerkrahmens 3 hieran.

Der Plattenlaufwerkrahmen 3 besitzt zwei Öffnungen 31 an zwei gegenüberliegenden Kanten der Vorderseite zum Eingriff mit einem dekorativen Paneel 4, zwei Öffnungen 32 an den beiden gegenüberliegenden lateralen Seiten, die mit den Öffnungen 22 des Gehäuseteils 2 ausgerichtet sind, zwei Öffnungen 37 an der Oberseite, die mit den Öffnungen 23 des Gehäuseteils 2 ausgerichtet sind, zwei dreieckige Öffnungen 34 an den beiden Seiten der Oberseite, die mit den dreieckigen Öffnungen 24 des Gehäuseteils 2 ausgerichtet sind, und eine Vielzahl von Öffnungen 366 an der Oberseite. Eine Vielzahl von Klammern 364 ist jeweils mit einem Schenkel 365 versehen, der in die Öffnungen 366 des Plattenlaufwerkrahmens 3 paßt, und hierauf mittels Schrauben befestigt. Die Positionen der Klammern 364 können zur Montage eines 3.5" Floppy-Disk-Laufwerks oder eines 5.25" Floppy-Disk-Laufwerks justiert werden. Der Plattenlaufwerkrahmen 3 besitzt zwei Öffnungen 30 an der Rückseite, so daß sich zwei Schrauben 47 durch die Öffnungen 46 am rückwärtigen Ende des Deckels 44 und die Öffnungen 30 erstrecken können, um den Deckel 44 zu fixieren. Der Boden des Plattenlaufwerkrahmens 3 besitzt eine Vielzahl von Öffnungen 361 zum Hindurchführen von Schrauben 25 in die Öffnungen 241 des Gehäuseteils 2 und Haken 26 zum Eingriff mit den dreieckigen Öffnungen 24 des Gehäuseteils 2. Die Oberseite des Plattenlaufwerkrahmens 3 besitzt zwei Gewindebohrungen 38, so daß sich zwei Schrauben 43 durch die Öffnungen 42 des dekorativen Paneels 4 in den Plattenlaufwerkrahmen 3 erstrecken können, um dieses zu fixieren. Das Paneel 4 ist mit zwei Haken 41 zum Eingriff mit den Öffnungen 37 des Plattenlaufwerkrahmens 3 und zwei Haken 410 zum Sichern von elektrischer Verkabelung (nicht dargestellt) versehen. Die Oberseite des Plattenlaufwerkrahmens 3 ist im Mittelabschnitt mit einer Öffnung 362 zum Hindurchführen von elektrischen Kabeln (nicht dargestellt), die auch als Griff verwendet werden kann, und Halterungen 363 neben der Öffnung 362 zum Halten von elektrischen Kabeln an ihrem Platz versehen. Der Deckel 44 ist in Form eines umgekehrten U ausgebildet und besitzt zwei vertikale Schenkel jeweils mit einer Vielzahl von Zungen 45 zum Eingriff mit den Öffnungen 262 der Seitenwandplatten 26 und den Öffnungen 34 des Plattenlaufwerkrahmens 3. Die Schrauben 47 erstrecken sich durch die Öffnungen 46 am rückwärtigen Ende des Deckels 44 zum Eingriff mit den Gewindebohrungen 30 am rückwärtigen Ende des Plattenlaufwerkrahmens 3. Das rückwärtige Ende des Deckels 44 ist mit einer Vielzahl von Belüftungsöffnungen 481 und einem Riegel 48 versehen, der mit einer Öffnungen 367 am rückwärtigen Ende des Plattenlaufwerkrahmens 3 in Eingriff bringbar ist.

Die Haken 16 an der Rückseite des Hauptrahmens 10 sind in Eingriff mit den Öffnungen 21 des Gehäuseteils 2 und den Öffnungen 31 des Plattenlaufwerkrahmens 3 und die Schraube 173 erstreckt sich durch die Öffnung 14 im unteren Vorderabschnitt des Hauptrahmens 10 zum Eingriff mit der Gewindebohrung 20 im unteren, mittleren Abschnitt des Gehäuseteils 2. Die Haken 171 an der Rückseite des unteren Paneels 17 stehen mit den Öffnungen 13 des Hauptrahmens 10 in Einrgriff. Das obere Paneel 18 ist über dem unteren Paneel 17 mit seinen Vorsprüngen 181 in Eingriff mit der Nut 11 des Hauptrahmens 10 und seinen Vorsprüngen 182 gegen eine Kante des Seitenpaneels 19 gedrückt angeordnet. Die Haken 191 des Seitenpaneels 19 sind in der Nut 12 des Hauptrahmens 10 befestigt. Das obere Paneel 18 ist operativ mit dem Druckknopf 120 verbunden, so daß dann, wenn dieser gedrückt wird, das obere Paneel 18 freigegeben wird und sich abwärts bewegt. Um die Bewegung des oberen Paneels 18 zu vergleichmäßigen, ist ein gezahntes Dämpfungsrad 121 an der Rückseite des Hauptrahmens 10 angeordnet und mit dem oberen Paneel 18 angetrieben verbunden. Der Plattenlaufwerkrahmen 3 ist auf der Oberseite des Gehäuseteils 2 befestigt. Der Deckel 44 steht mit der Oberseite des Plattenlaufwerkrahmens 3 und den Öffnungen 262 der beiden Seitenplatten 26 in Eingriff. Die Rückseite des Deckels 44 ist an der Rückseite des Plattenlaufwerkrahmens 3 durch Schrauben 47 befestigt, die sich durch die Gewindebohrungen 46 und 30 erstrecken.

Folglich ist es dann, wenn der Computer erweitert werden soll, nur notwendig, einen zusätzlichen Plattenlaufwerkrahmen 3 auf dem Gehäuseteil 2 - wie beschrieben - zu montieren, um den Computer hierdurch aufzurüsten. Hierbei sind lediglich Seitenwandplatten 26 größerer Länge vonnöten.

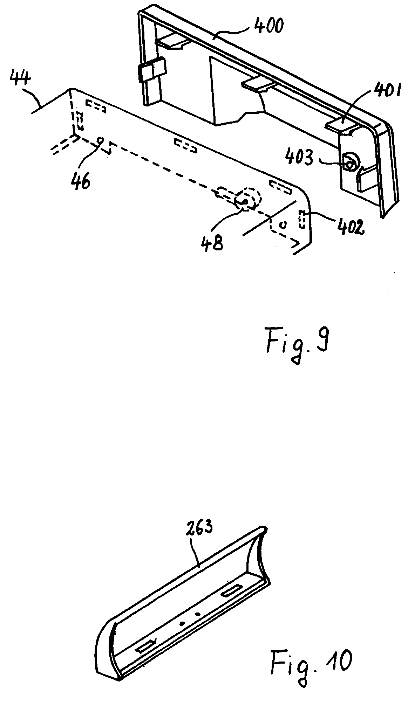

Gemäß Fig. 9 kann der Deckel 44 an seiner Rückseite mit einem etwa haubenförmigen Griff 400 versehen sein, der über Schnappnasen 401, die durch entsprechende Schlitze 402 in der Rückwand des Deckels 44 gesteckt werden und den Griff 400 am Deckel 44 halten, am Deckel 44 befestigt ist. Der Griff 400 dient zum Erleichtern des Ziehens des Deckels 44 nach hinten, um diesen zu lösen. Der Griff 44 besitzt eine Führungsöse 403 zum Hindurchführen eines Betätigungselements für den Riegel 48.

## Patentansprüche

1. Computergehäuse mit
einem quaderförmigen Gehäuseteil (2),
einem Frontpaneel (1) umfassend einen Hauptrahmen (10), ein oberes Paneel (18), ein unteres Paneel (17) und ein Seitenpaneel (19),
wobei der Hauptrahmen (10) mit der Vorderseite des Gehäuseteils (2) lösbar in Eingriff steht, einen unteren Mittelabschnitt mit einer sich schräg aufwärts erstreckenden Öffnung (14) zur Aufnahme einer Schraube (173) in Eingriff mit einer Gewindebohrung (20) des Gehäuseteils (2) sowie seitlich eine vertikale Nut (11) und frontseitig eine weitere vertikale Nut (12) aufweist,
wobei das obere Paneel (18) mit einem oberen Abschnitt des Hauptrahmens (10), das untere Paneel (17) mit einem unteren Abschnitt des Hauptrahmens (10) und das Seitenpaneel (19) mit der weiteren vertikalen Nut (12) des Hauptrahmens (10) lösbar in Eingriff ist,
einem Dämpfungsglied (121) an der Rückseite des Hauptrahmens (10) in Eingriff mit dem oberen Paneel (18),
zwei Seitenwandplatten (26), die auf gegenüberliegenden Seiten des Gehäuseteils (2) angeordnet sind,
einem aus wenigstens einem Plattenlaufwerkrahmen (3) bestehenden Stapel aus Plattenlaufwerkrahmen (3), der mit den Oberkanten der Seitenwandplatten (26) und der Oberseite des Gehäuseteils (2) lösbar in Eingriff ist, wobei die Oberseite jedes Plattenlaufwerkrahmens (3) mit einer Vielzahl von Klammern (364) versehen ist, und
einem Deckel (44), der mit der Oberseite des obersten Plattenlaufwerkrahmens (3) lösbar in Eingriff ist.

2. Computergehäuse nach Anspruch 1, dadurch gekennzeichnet, daß das Dämpfungsglied (121) ein Dämpfungszahnrad ist, das in getriebenem Eingriff mit dem oberen Paneel (18) steht.

3. Computergehäuse nach Anspruch 1 oder 2, dadurch gekennzeichnet, daß die Seitenwandplatten (26) an ihrer Oberkante gekrümmte Laschen (263) aufweisen.

4. Computergehäuse nach einem der Ansprüche 1 bis 3, dadurch gekennzeichnet, daß ein dekoratives Paneel (4), das mit der Vorderseite des Deckels (44) lösbar in Eingriff ist, vorgesehen ist.

5. Computergehäuse nach einem der Ansprüche 1 bis 4, dadurch gekennzeichnet, daß die Rückseite des Deckels (44) mit einer Vielzahl von Lüftungsöffnungen (481) versehen ist.

6. Computergehäuse nach einem der Ansprüche 1 bis 5, dadurch gekennzeichnet, daß das obere Paneel (18) außenseitig mit einem gegebenenfalls mit einer Bekleidung (180) versehenen Griff (1800) versehen ist.

7. Computergehäuse nach einem der Ansprüche 1 bis 6, dadurch gekennzeichnet, daß der Deckel (44) rückseitig mit einem Griff (400) verbunden ist.

8. Computergehäuse nach Anspruch 7, dadurch gekennzeichnet, daß der Griff (400) über eine Schnappverbindung mit dem Deckel (44) verbunden ist.
